# EUROPÄISCHE PATENTSCHRIFT

(11) **EP 0 673 136 B1**
(45) Veröffentlichungstag und Bekanntmachung des Hinweises auf die Patenterteilung: **13.08.2003**
(21) Anmeldenummer: 95102017.1
(22) Anmeldetag: 14.02.1995
(51) Int. Cl.: H04L 12/56, H04L 29/04

(54) **Verfahren und Schaltungsanordnung zum Steuern der Übertragung von Nachrichtenblöcken innerhalb eines Übertragungssystems**
Method and circuit arrangement for controlling the transmission of data blocks within a communication system
Méthode et dispositif de commande de transmission de blocs de données dans un système de communication

(30) Priorität: 18.02.1994 DE 4405262
(43) Veröffentlichungstag der Anmeldung: 20.09.1995
(73) Patentinhaber: SIEMENS AKTIENGESELLSCHAFT, 80333 München (DE)
(72) Erfinder: Schenk, Heinrich, Dr., D-81476 München (DE); Knecht, Stephan, Dipl.-Ing., D-81369 München (DE)

(56) Entgegenhaltungen:
- EP-A- 0 475 180
- EP-A- 0 577 359
- US-A- 5 119 367

## Beschreibung

Die Erfindung betrifft ein Verfahren und eine Schaltungsanordnung zum Steuern der Übertragung von Nachrichtenblöcken innerhalb eines Übertragungssystems gemäß Oberbegriff des Patentanspruches 1.

Durch EP-A1-0 475 180 ist bereits eine Fernmeldevermittlungsanlage zum Übertragen von Nachrichtenblöcken bekannt, in welcher mit Übertragungsleitungen verbundene Leitungsanschlußeinrichtungen über ein internes Leitungssystem an eine Mehrzahl von Vermittlungsrechnern angeschlossen sind und dabei in die Übertragung von Nachrichtenblöcken im Zuge einer Verbindung einer der Vermittlungsrechner sowie wenigstens eine der Leitungsanschlußeinrichtungen einbezogen sind. Dabei ist unter anderem vorgesehen, daß von einem Vermittlungsrechner her zuvor in eine Übertragungswarteschlange eingefügte Nachrichtenblöcke zunächst fortlaufend, d.h. mit einer offenen Fenstergröße W=∞ zu einer für die jeweilige Verbindung in Frage kommenden Leitungsanschlußeinrichtung hin übertragen und dort in eine Empfangswarteschlange eingefügt werden. Bei Erreichen eines festgelegten Füllgrades einer solchen Empfangswarteschlange wird die Übertragung von Nachrichtenblöcken zu der jeweiligen Leitungsanschlußeinrichtung hin für eine festgelegte Zeitspanne unterbrochen. Die dadurch zunächst nicht übertragbaren Nachrichtenblöcke werden dabei in eine für die jeweilige Leitungsanschlußeinrichtung individuell eingerichtete Rückstell-Warteschlange eingefügt. Nach Ablauf der festgelegten Zeitspanne wird dann die Übertragung von Nachrichtenblöcken zu der jeweiligen Leitungsanschlußeinrichtung hin zunächst unter Berücksichtigung der in die zuvor eingerichtete Rückstell-Warteschlange eingefügten Nachrichtenblöcke wieder aufgenommen.

Alternativ oder zusätzlich dazu können in einer Leitungsanschlußeinrichtung den damit verbundenen Übertragungsleitungen individuell zugeordnete Leitungswarteschlangen vorgesehen sein. In diesen Leitungswarteschlangen werden die von einem Vermittlungsrechner her zunächst mit einer offenen Fenstergröße (W=∞) abgegebenen Nachrichtenblöcke eingefügt. Bei Überschreiten eines festgelegten ersten Füllgrades einer solchen Leitungswarteschlange wird von der jeweiligen Leitungsanschlußeinrichtung her ein entsprechendes Steuersignal zu dem in Frage kommenden Vermittlungsrechner hin übertragen. Daraufhin werden für die betreffende Leitungswarteschlange bestimmte Nachrichtenblöcke lediglich noch mit einer Fenstergröße W=1 zu der jeweiligen Leitungsanschlußeinrichtung hin übertragen. Bei Erreichen eines festgelegten, oberhalb des ersten Füllgrades liegenden zweiten Füllgrades einer Leitungswarteschlange, was wiederum durch ein entsprechendes Steuersignal von der jeweiligen Leitungsanschlußeinrichtung her angezeigt wird, wird dagegen die Übertragung von in die betreffende Leitungswarteschlange einzufügenden Nachrichtenblöcken von dem jeweiligen Vermittlungsrechner her unterbrochen. Die dadurch zunächst nicht übertragbaren Nachrichtenblöcke werden dabei in eine der betreffenden Leitungswarteschlange zugeordnete Rückstell-Warteschlange eingefügt. Erst nach Ablauf einer festgelegten Zeitspanne wird dann die Übertragung von Nachrichtenblöcken, die in die betreffende Leitungswarteschlange einzufügen sind, von dem jeweiligen Vermittlungsrechner her wieder aufgenommen, und zwar zunächst unter Berücksichtigung der in der Rückstell-Warteschlange eingefügten Nachrichtenblöcke.

Die zuvor genannten Steuermaßnahmen zur Übertragung von Nachrichtenblöcken zwischen Vermittlungsrechnern und Leitungsanschlußeinrichtungen stellen also ein Regelsystem dar. Dabei hängt insbesondere die Größe der zuvor genannten Leitungswarteschlangen von der Gesamtlaufzeit der Regelschleife ab. Die Regelschleife besteht dabei aus dem Aussenden eines Nachrichtenblockes, dem Erkennen einer Überlast in einer der Leitungswarteschlangen, dem Zurücksenden eines entsprechenden Steuersignals und aus der Reaktion des Vermittlungsrechners auf ein solches Steuersignal. Daraus können gegebenenfalls relativ hohe Laufzeiten und Speichergrößen resultieren, die zuweilen unerwünscht sind.

Es ist nun Aufgabe der vorliegenden Erfindung, einen Weg zu zeigen, wie ein Verfahren und eine Schaltungsanordnung gemäß Oberbegriff des Patentanspruches 1 bzw. des Patentanspruches 5 ausgebildet werden können, um die Gesamtlaufzeit einer Regelschleife für die Steuerung der Übertragung von Nachrichtenblöcken zu reduzieren.

Gelöst wird diese Aufgabe bei einem Verfahren gemäß Oberbegriff des Patentanspruches 1 durch die in diesem Patentanspruch angegebenen Verfahrensmerkmale.

Die Erfindung bringt dabei den Vorteil mit sich, daß die Belastung der einzelnen Schnittstellen durch zugeführte Nachrichtenblöcke ausschließlich in dem jeweiligen Übertragungsprozessor ermittelt wird und somit keine die Laufzeit der Regelschleife beeinflussende Kommunikationen zwischen dem jeweiligen Übertragungsprozessor und der damit verbundenen Leitungsanschlußeinrichtung erforderlich sind. Ein weiterer Vorteil besteht darin, daß an den einzelnen Schnittstellen einer Leitungsanschlußeinrichtung keine den beim Stand der Technik vorgesehenen Leitungswarteschlangen entsprechende Speicheranordnungen erforderlich sind.

Zweckmäßige Ausgestaltungen des Verfahrens gemäß der vorliegenden Erfindung ergeben sich aus den Patentansprüchen 2 bis 4.

Die vorstehend aufgezeigte Aufgabe wird bei einer Schaltungsanordnung gemäß Oberbegriff des Patentanspruches 5 durch die in diesem Patentanspruch angegebenen schaltungstechnischen Merkmale gelöst. Der Vorteil der Erfindung besteht dabei in dem geringen schaltungstechnischen Aufwand für das ausschließlich in dem jeweiligen Übertragungsprozessor realisierte Regelsystem zur Übertragung von Nachrichtenblöcken zwischen diesem Übertragungsprozessor und der damit verbundenen Leitungsanschlußeinrichtung.

Zweckmäßige Ausgestaltungen der Schaltungsanordnung gemäß der vorliegenden Erfindung ergeben sich aus den Patentansprüchen 6 bis 8.

Im folgenden wird die vorliegende Erfindung anhand eines Ausführungsbeispieles näher erläutert.
- FIG 1: zeigt in schematischer Form ein Übertragungssystem, bei welchem die Erfindung angewandt ist, und
- FIG 2: zeigt ausschnittweise einen möglichen Aufbau einer der in FIG 1 lediglich schematisch dargestellten Übertragungsprozessor-Einheiten sowie einer damit verbundenen Leitungsanschlußeinrichtung.

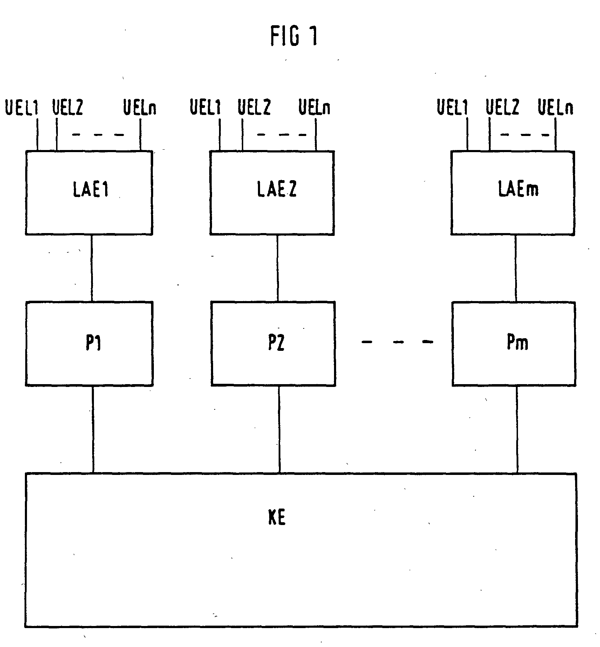

In FIG 1 ist schematisch ein Übertragungssystem dargestellt, welches eine Mehrzahl m von identisch ausgebildeten Übertragungsprozessor-Einheiten P1...Pm aufweist. Diese Übertragungsprozessor-Einheiten stehen einerseits miteinander über eine Koppeleinrichtung KE und andererseits jeweils mit einer Leitungsanschlußeinrichtung in Verbindung. Diese Leitungsanschlußeinrichtungen, an welche jeweils eine Mehrzahl n von Übertragungsleitungen UEL1...UELn angeschlossen ist, sind entsprechend der Zuordnung zu den Übertragungsprozessor-Einheiten mit LAE1...LAEm bezeichnet. Das Übertragungssystem möge dabei beispielsweise als Paket-Übertragungssystem ausgebildet sein, wobei es sich bei der Koppeleinrichtung KE beispielsweise um eine oder mehrere miteinander verbundene Vermittlungseinrichtungen, um eine oder mehrere "Cross-Connect"-Einrichtungen oder um ein Ringleitungssystem handeln möge.

Die Übertragung von Nachrichtensignalen innerhalb dieses Übertragungssystems möge dabei in Form von Nachrichtenblöcken bzw. Nachrichtenpaketen erfolgen. Diese Nachrichtenpakete enthalten jeweils neben den eigentlich zu übertragenden Nutzinformationen unter anderem eine Adresseninformation, durch welche die für die Weiterleitung in Frage kommende Übertragungsleitung UEL1...UELn bezeichnet ist. Diese Adresseninformation ist dabei beispielsweise in einem Paketkopf des jeweiligen Nachrichtenpaketes enthalten. Für den Fall, daß die Nachrichtenpakete mit einer variablen Paketlänge übertragen werden, verfügt der Paketkopf auch über Angaben bezüglich der jeweiligen Paketlänge oder das jeweilige Nachrichtenpaket ist durch eine Anfangs- und Endekennung markiert.

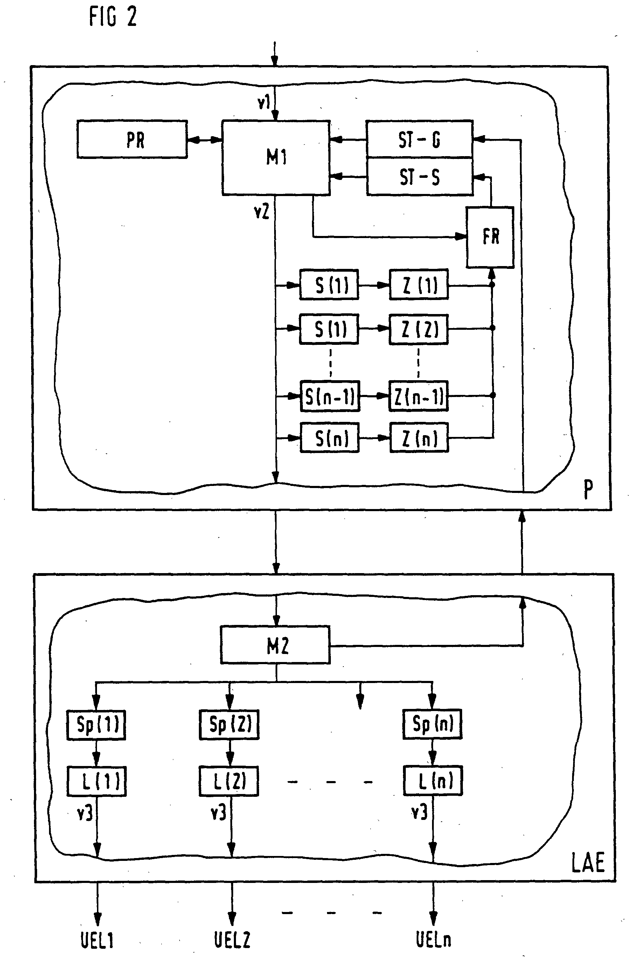

In FIG 2 ist ein möglicher Aufbau einer der in FIG 1 angegebenen Übertragungsprozessor-Einheiten sowie einer damit verbundenen Leitungsanschlußeinrichtung ausschnittweise dargestellt. Die Übertragungsprozessor-Einheit ist dabei mit P, die Leitungsanschlußeinrichtung dagegen mit LAE bezeichnet. Dabei sind in dieser FIG lediglich diejenigen Elemente angegeben, die für die Erläuterung der vorliegenden Erfindung erforderlich sind.

Die Übertragungsprozessor-Einheit P weist einen für die Steuerung der Aufnahme und Weiterleitung von Nachrichtenpaketen dienenden Prozessor PR auf, welcher unter anderem mit einem Paketspeicher M1 verbunden ist. In diesen Paketspeicher werden die der Übertragungsprozessor-Einheit mit einer Übertragungsrate V1 über die in FIG 1 angegebene Koppeleinrichtung KE zugeführten Nachrichtenpakete aufgenommen. Der Paketspeicher dient dabei als Paketwarteschlange, d.h. als Geschwindigkeitsanpassungs-Speicher, um die Nachrichtenpakete mit einer gegenüber der Übertragungsrate V1 niedrigeren Übertragungsrate V2 an die zugehörige Leitungsanschlußeinrichtung LAE weiterzuleiten.

Eingangsseitig weist die Leitungsanschlußeinrichtung LAE einen ebenfalls als Paketwarteschlange dienenden Paketspeicher M2 beispielsweise in Form eines "First-In-First-Out"-Speichers auf, von welchem aus die zugeführten Nachrichtenpakete nach Maßgabe der in diesen jeweils enthaltenen Adresseninformationen auf die in FIG 1 dargestellten Übertragungsleitungen UEL1...UELn verteilt werden. Dabei wird davon ausgegangen, daß die Nachrichtenblöcke über die jeweilige Übertragungsleitung mit einer näherungsweise konstanten Abflußrate V3 weitergeleitet werden, die niedriger als die Übertragungsrate V2 ist. In der Leitungsanschlußeinrichtung LAE ist für jede der Übertragungsleitungen UEL1...UELn eine gesonderte Schnittstelle vorgesehen, die aus einem Zwischenspeicher Sp beispielsweise zur Protokollumsetzung und einem Anpassungsbaustein L gebildet ist. Die Zuordnung zu der jeweiligen Übertragungsleitung geht dabei aus einem in Klammern gesetzten Bezugszeichen hervor.

Durch die gerade angegebene mehrfache Geschwindigkeitsumsetzung kann der Fall auftreten, daß bei einer längeren Überlast aufgrund eines erhöhten Verkehrsaufkommens ohne Gegenmaßnahmen der Paketspeicher M2 in der Leitungsanschlußeinrichtung LAE "überläuft". Um ein solches "Überlaufen" zu verhindern, ist bei dem vorliegenden Ausführungsbeispiel eine Flußsteuerung vorgesehen, die zweistufig ausgebildet ist. Gemäß einer ersten, globalen Flußsteuerung wird in der Leitungsanschlußeinrichtung LAE ständig der Füllgrad des Paketspeichers M2 überwacht und bei Erreichen eines festgelegten Schwellwertes ein eine Überlast anzeigendes Steuersignal durch den Paketspeicher M2 zu einer in FIG 2 dargestellten globalen Steuereinrichtung ST-G hin übertragen. Unter der Steuerung dieser Steuereinrichtung wird dann die Abgabe von Nachrichtenpaketen durch den Paketspeicher M1 unterbunden. Auf diese Weise ist sichergestellt, daß alle Nachrichtenpakete, die in der Übertragungsprozessor-Einheit P verarbeitet und an die Leitungsanschlußeinrichtung LAE gesendet werden, auch tatsächlich an die in Frage kommenden Übertragungsleitungen weitergeleitet werden. Dies ist insbesondere dann wesentlich, wenn die von dem Paketspeicher M1 her abgegebenen Nachrichtenpakete durch den Prozessor gebührenmäßig erfaßt werden.

Tritt eine Überlast lediglich auf einer der Übertragungsleitungen UEL1...UELn auf, so wird aufgrund der globalen Flußsteuerung nicht nur die Weiterleitung von Nachrichtenpaketen zu dieser Übertragungsleitung hin unterbunden, und zwar unter Verwerfen dieser Nachrichtenpakete, sondern es wird auch die Übertragung von Nachrichtenpaketen für die übrigen Übertragungsleitungen beeinträchtigt. Um dies zu vermeiden, ist eine zweite, schnittstellen- und damit übertragungsleitungsbezogene Flußsteuerung vorgesehen. Für diese wird in der Übertragungsprozessor-Einheit P individuell für die einzelnen Schnittstellen und damit Übertragungsleitungen nach Maßgabe der Anzahl der pro Zeiteinheit an diese jeweils weitergeleiteten Nachrichtenpakete und der Abflußrate für die jeweilige Übertragungsleitung ein momentaner Lastwert ermittelt. Bei Überschreiten eines festgelegten Grenzwertes durch den für eine solche Schnittstelle ermittelten momentanen Lastwert wird lediglich die Abgabe von Nachrichtenpaketen an die jeweilige Schnittstelle unterbunden. Für die Ermittlung der schnittstellenindividuellen Lastwerte sind mit dem Ausgang des Paketspeichers M1 den Schnittstellen und damit den Übertragungsleitungen individuell zugeordnete Selektionseinrichtungen verbunden, die entsprechend ihrer Zuordnung zu den Übertragungsleitungen UEL1...UELn mit S(1)...S(n) bezeichnet sind. Der jeweiligen Selektionseinrichtung ist dabei eine Zähleranordnung nachgeschaltet, deren Zählbereich hinsichtlich des minimalen und des maximalen Zählerstandes begrenzt ist. Es kann sich also hier beispielsweise um einen Vorwärts-Rückwärts-Zähler handeln, dessen minimaler Zählerstand der Zählerstand "0" ist. Die einzelnen Zähleranordnungen sind in FIG 2 entsprechend ihrer Zuordnung zu den Selektionseinrichtungen mit S(1)...S(n) mit Z(1)...Z(n) bezeichnet.

Die jeweilige Selektionseinrichtung ist derart ausgebildet, daß durch diese die der zugeordneten Schnittstelle (Übertragungsleitung) zuzuführenden Nachrichtenpakete anhand der darin enthaltenen Adresseninformation erfaßt und der momentane Zählerstand der zugehörigen Zähleranordnung um einen der Paketlänge des jeweiligen Nachrichtenpaketes entsprechenden Zählwert inkrementiert wird. Hierzu können beispielsweise für den Fall, daß innerhalb des Übertragungssystems Nachrichtenpakete mit einer variablen Paketlänge übertragen werden, die in den Paketköpfen dieser Nachrichtenpakete enthaltenen Angaben bezüglich der Paketlänge herangezogen werden. Alternativ dazu kann durch die jeweilige Selektionseinrichtung die Paketlänge auch durch Zählen beispielsweise der in dem jeweiligen Nachrichtenpaket enthaltenen Bytes ermittelt werden, falls in den Paketköpfen der Nachrichtenpakete keine Angaben bezüglich der Paketlänge enthalten sind und das jeweilige Nachrichtenpaket durch eine Anfangs- und Endekennung markiert ist. Darüber hinaus kann für den Fall, daß innerhalb des Übertragungssystems lediglich Nachrichtenpakete mit einer festen Paketlänge übertragen werden, mit jedem Auftreten eines Nachrichtenpaketes direkt der momentane Zählerstand der jeweiligen Zähleranordnung um einen der festen Paketlänge entsprechenden Zählwert inkrementiert werden.

In allen vorgenannten Fällen kann als Zählwert, um den der momentane Zählerstand einer Zähleranordnung bei Auftreten eines Nachrichtenpaketes zu inkrementierten ist, die Anzahl der zu dem jeweiligen Nachrichtenpaket gehörenden Bytes benutzt werden. Es kann jedoch auch ein davon abweichender, proportional zu der Paketlänge des jeweiligen Nachrichtenpaketes festgelegter Zählwert herangezogen werden.

Darüber hinaus wird die jeweilige Zähleranordnung Z(1)...Z(n) in periodischen Zeitabständen jeweils um einen der Abflußrate der Nachrichtenpakete auf der jeweiligen Übertragungsleitung entsprechenden Zählwert dekrementiert. Auch hier wird entweder die Anzahl der pro Zeitintervall abfließenden Bytes oder eine dazu proportionale Größe herangezogen.

Überschreitet der momentane Zählerstand einer der Zähleranordnungen Z(1)...Z(n) einen festgelegten Schwellwert, so wird an einem Steuerausgang der jeweiligen Zähleranordnung ein eine Überlast der jeweiligen Schnittstelle und damit der Übertragungsleitung anzeigendes Steuersignal bereitgestellt.

Die Steuerausgänge der Zähleranordnungen Z(1)...Z(n) sind bei dem vorliegenden Ausführungsbeispiel gemeinsam an eine Freigabeeinrichtung FR angeschlossen, welcher zusätzlich von dem Paketspeicher M1 her ein dessen Füllgrad anzeigendes Freigabesignal zugeführt ist. Ein der Freigabeeinrichtung FR zugeführtes, eine Überlast einer Schnittstelle anzeigendes Steuersignal wird dabei lediglich dann zu einer schnittstellenbezogenen Steuereinrichtung ST-S weitergeleitet, wenn durch das genannte Freigabesignal ein oberhalb eines festgelegten Schwellwertes liegender Füllgrad des Paketspeichers M1 angezeigt ist. Unter der Steuerung dieser Steuereinrichtung ST-S wird dann die Weiterleitung von Nachrichtenpaketen an die jeweilige Übertragungsleitung UEL1...UELn unterbunden, d.h. die für diese Übertragungsleitung bestimmten Nachrichtenpakete werden verworfen. Durch diese gezielte Freigabe von eine Überlast anzeigenden Steuersignalen wird erreicht, daß Nachrichtenpakete lediglich dann verworfen werden, wenn der Füllgrad des Paketspeichers M1 den festgelegten Schwellwert überschreitet.

Bezüglich des anhand der FIG 2 erläuterten Ausführungsbeispieles sei noch darauf hingewiesen, daß die für die schnittstellenbezogene Flußsteuerung vorgesehenen Einrichtungen auch derart modifiziert sein können, daß anstelle der Selektionseinrichtungen S(1)...S(n) eine einzige im Multiplexbetrieb ausgenutzte Selektionseinrichtung vorgesehen sein kann, welche nach Maßgabe der in den Nachrichtenpaketen enthaltenen Adresseninformationen die für das jeweilige Nachrichtenpaket in Frage kommende Zähleranordnung selektiert und dabei deren momentanen Zählerstand in der oben angegebenen Weise inkrementiert.

Darüber hinaus kann für eine Identifizierung einer Zähleranordnung Z(1)...Z(n) durch die Steuereinrichtung ST-S eine die jeweilige Zähleranordnung und damit die zugeordnete Schnittstelle (Übertragungsleitung) bezeichnende Adresseninformation zusammen mit einem eine Überlast anzeigenden Steuersignal über die Freigabeeinrichtung FR an die Steuereinrichtung ST-S abgegeben werden. Alternativ dazu können diese Steuersignale auch über den Zähleranordnungen individuell zugeordnete Leitungen zu der Steuereinrichtung ST-S hin übertragen werden.

Im übrigen können die genannten Zähleranordnungen je nach den Übertragungsraten entweder softwaremäßig oder hardwaremäßig, beispielsweise in Form von Zählerbausteinen oder einer programmierbaren Logik, realisiert sein.

## Patentansprüche

1. Verfahren zum Steuern der Übertragung von Nachrichtenblöcken innerhalb eines Übertragungssystems, welches über miteinander verbundene Übertragungsprozessoren (P) verfügt, von welchen aus jeweils die für diese bestimmten Nachrichtenblöcke nach Durchlauf einer Prozessorwarteschlange (M1) mit einer festgelegten Übertragungsrate (V2) an eine individuell zugeordnete Leitungsanschlußeinrichtung (LAE) weitergeleitet werden, die über eine Mehrzahl von Schnittstellen verfügt, mit denen jeweils eine für die Weiterleitung von Nachrichtenblöcken mit einer gegenüber der festgelegten Übertragungsrate (V2) niedrigeren Abflußrate (V3) ausgelegte Übertragungsleitung (UEL) verbunden ist, wobei die die Prozessorwarteschlange (M1) verlassenden Nachrichtenblöcke jeweils über eine Adressinformation verfügen, durch welche die für die Weiterleitung in Frage kommende Schnittstelle bezeichnet ist,
**dadurch gekennzeichnet,**
- **daß** in dem jeweiligen Übertragungsprozessor (P) individuell für die einzelnen zugeordneten Schnittstellen nach Maßgabe der Anzahl der pro Zeiteinheit an diese jeweils weitergeleiteten Nachrichtenblöcke und der Abflußrate (V3) ein momentaner Lastwert ermittelt wird, und
- **daß** bei Überschreiten eines festgelegten Grenzwertes durch den für eine der Schnittstellen ermittelten momentanen Lastwert die Abgabe von Nachrichtenblöcken an die jeweilige Schnittstelle unterbunden wird.

2. Verfahren nach Anspruch 1,
**dadurch gekennzeichnet,**
**daß** die an eine Schnittstelle momentan nicht weiterleitbaren Nachrichtenblöcke dann durch den jeweiligen Übertragungsprozessor verworfen werden, wenn die diesem zugehörige Prozessorwarteschlange einen festgelegten Füllgrad überschreitet.

3. Verfahren nach Anspruch 1 oder 2,
**dadurch gekennzeichnet,**
**daß** das Übertragungssystem als Paket-vermittelndes System ausgebildet ist, in welchem die Nachrichtenblöcke als Pakete mit variabler Länge übertragen werden, wobei in die Ermittlung eines momentanen Lastwertes neben der Anzahl der pro Zeiteinheit an die jeweilige Eingangswarteschlange abgegebenen Nachrichtenblöcke auch deren Länge mit einbezogen wird.

4. Verfahren nach Anspruch 1 oder 2,
**dadurch gekennzeichnet,**
**daß** das Übertragungssystem als paket-vermittelndes System ausgebildet ist, in welchem die Nachrichtenblöcke als Pakete mit einer festen Länge übertragen werden.

5. Verfahren nach einem der vorstehenden Ansprüche,
**dadurch gekennzeichnet,**
**daß** die Nachrichtenblöcke an eine Eingangswarteschlange (M2) der individuell zugeordneten Leitungsanschlußeinrichtung weitergeleitet werden, wobei zwischen dem jeweiligen Übertragungsprozessor und der diesem zugeordneten Leitungsanschlußeinrichtung eine Flußsteuerung derart durchgeführt wird, daß durch den Übertragungsprozessor bei Vorliegen eines festgelegten Füllgrades der Eingangswarteschlange die Abgabe von Nachrichtenblöcken an diese bzw. bei einer Überlastung einer der Schnittstellen die Abgabe die dieser zuzuführenden Nachrichtenblöcke unterbunden wird.

6. Schaltungsanordnung zum Steuern der Übertragung von Nachrichtenblöcken innerhalb eines Übertragungssystems, welches über miteinander verbundenen Übertragungsprozessoren (P) verfügt, von welchen aus jeweils die für diese bestimmten Nachrichtenblöcke nach Durchlauf einer Prozes-sorwarteschlange (M1) mit einer festgelegten Übertragungsrate an eine individuell zugeordnete Leitungsanschlußeinrichtung (LAE) weitergeleitet werden, die über eine Mehrzahl von Schnittstellen verfügt, mit denen jeweils eine für die Weiterleitung von Nachrichtenblöcken mit einer gegenüber der festgelegten Übertragungsrate (V2) niedrigeren Abflußrate (V3) ausgelegte Übertragungsleitung (UEL) verbunden ist, wobei die die Prozessorwarteschlange (M1) verlassenden Nachrichtenblöcke jeweils über eine Adressinformation verfügen, durch welche die für die Weiterleitung in Frage kommende Schnittstelle bezeichnet ist,
**dadurch gekennzeichnet,**
- **daß** in dem jeweiligen Übertragungsprozessor (P) der Prozessorwarteschlange (M1) den Schnittstellen individuell zugeordnete Selektionsmittel (S) nachgeschaltet sind,
- **daß** an das jeweilige Selektionsmittel (S) ein Zählmittel (Z) angeschlossen ist, dessen Zählbereich hinsichtlich des minimalen und des maximalen Zählerstandes begrenzt ist, und
- **daß** die Selektionsmittel und die Zählmittel derart miteinander verbunden und ausgebildet sind,
- **daß** durch das jeweilige Selektionsmittel die der zugeordneten Schnittstelle zuzuführenden Nachrichtenblöcke anhand der darin enthaltenen Adresseninformation erfaßt und der momentane Zählerstand des zugehörigen Zählmittels um einen der Länge des jeweiligen Nachrichtenblockes entsprechenden Zählwert inkrementiert wird,
- **daß** darüber hinaus der momentane Zählerstand dieses Zählmittels in periodischen Zeitabständen um einen der Abflußrate der Nachrichtenblöcke entsprechenden Zählwert dekrementiert wird, und
- **daß** bei Überschreiten eines festgelegten Schwellwertes durch den momentanen Zählerstand ein eine Überlast der jeweiligen Schnittstelle anzeigendes Steuersignal an einem Steuerausgang des Zählmittels bereitgestellt ist.

7. Schaltungsanordnung nach Anspruch 6,
**dadurch gekennzeichnet,**
**daß** für den Fall, daß die Nachrichtenblöcke in Form von Paketen mit einer variablen Paketlänge auftreten und in dem jeweiligen Paket zusätzlich zu einer Adresseninformation Angaben bezüglich der Paketlänge enthalten sind, durch das jeweilige Selektionsmittel der momentane Zählerstand des zugehörigen Zählmittels nach Maßgabe dieser Angaben inkrementiert wird.

8. Schaltungsanordnung nach Anspruch 6,
**dadurch gekennzeichnet,**
**daß** für den Fall, daß die Nachrichtenblöcke in Form von Paketen mit einer variablen Paketlänge auftreten und in dem jeweiligen Paket neben der Adresseninformation lediglich einer Paketanfangs- und -endekennung enthalten ist, durch das jeweilige Selektionsmittel die Paketlänge anhand der in den Paketen jeweils enthaltenen Paketanfangs- und -endekennung ermittelt und der momentane Zählerstand des zugehörigen Zählmittels nach Maßgabe der ermittelten Paketlänge inkrementiert wird.

9. Schaltungsanordnung nach einem der Ansprüche 6 bis 8, **dadurch gekennzeichnet,**
**daß** die Steuerausgänge der Zählmittel gemeinsam an ein Freigabemittel (FR) angeschlossen sind, welchem zusätzlich ein den Füllgrad der dem jeweiligen Übertragungsprozessor zugehörigen Prozessorwarteschlange (M1) anzeigendes Freigabesignal zugeführt ist, wobei ein eine Überlast einer Schnittstelle anzeigendes Steuersignal lediglich dann freigegeben ist, wenn durch das Freigabesignal ein oberhalb eines festgelegten Schwellwertes liegender Füllgrad der Prozessorwarteschlange angezeigt ist.

10. Schaltungsanordnung nach einem der Ansprüche 6 bis 9,
**dadurch gekennzeichnet,**
**daß** für den Fall, daß die Nachrichtenblöcke an eine Eingangswarteschlange (M2) der individuell zugeordneten Leitungsanschlußeinrichtung weitergeleitet werden, zwischen dem jeweiligen Übertragungsprozessor und der diesem zugeordneten Leitungsanschlußeinrichtung eine Flußsteuerung derart vorgesehen und ausgebildet ist, daß in der Leitungsanschlußeinrichtung ständig der Füllgrad der Eingangswarteschlange überwacht und bei Erreichen eines festgelegten Schwellwertes ein eine Überlast anzeigendes Steuersignal zu einer globalen Steuereinrichtung (ST-G) hin übertragen wird, worauf unter Steuerung dieser Steuereinrichtung dann die Abgabe von Nachrichtenblöcken aus der zugeordneten Prozessorwarteschlange (M1) unterbunden wird.

## Claims

1. Method for controlling the transmission of message blocks within a transmission system which has interconnected transmission processors (P) from which the respective message blocks intended for them are forwarded, having passed through a processor queue (M1), at a stipulated transmission rate (V2) to an individually assigned line termination device (LAE) which has a plurality of interfaces to which a respective transmission line (UEL) designed for forwarding message blocks at a flow rate (V3) which is lower than the stipulated transmission rate (V2) is connected, the message blocks which leave the processor queue (M1) each having an address information item which denotes the interface suitable for forwarding,
**characterized**
- **in that** the respective transmission processor (P) individually ascertains an instantaneous load value for the individual assigned interfaces as stipulated by the number of message blocks respectively forwarded thereto per unit time and by the flow rate (V3), and
- **in that** if the instantaneous load value ascertained for one of the interfaces exceeds a stipulated limit value, the output of message blocks to the respective interface is stopped.

2. Method according to Claim 1,
**characterized**
**in that** the message blocks which currently cannot be forwarded to an interface are rejected by the respective transmission processor if the processor queue associated therewith exceeds a stipulated filling level.

3. Method according to Claim 1 or 2,
**characterized**
**in that** the transmission system is in the form of a packet-switching system in which the message blocks are transmitted as packets of variable length, the ascertainment of an instantaneous load value including not only the number of message blocks which are output to the respective input queue per unit time but also the length of said message blocks.

4. Method according to Claim 1 or 2,
**characterized**
**in that** the transmission system is in the form of a packet-switching system in which the message blocks are transmitted as packets of fixed length.

5. Method according to one of the preceding claims,
**characterized**
**in that** the message blocks are forwarded to an input queue (M2) for the individually assigned line termination device, with flow control being carried out between the respective transmission processor and the line termination device associated therewith such that, if the input queue is at a stipulated filling level, the transmission processor stops the output of message blocks to said input queue, and, if one of the interfaces is overloaded, its stops the output [lacuna] the message blocks which are to be supplied to this interface.

6. Circuit arrangement for controlling the transmission of message blocks within a transmission system which has interconnected transmission processors (P) from which the respective message blocks intended for these are forwarded, having passed through a processor queue (M1), at a stipulated transmission rate to an individually assigned line termination device (LAE) which has a plurality of interfaces to which a respective transmission line (UEL) designed for forwarding message blocks at a flow rate (V3) which is lower than the stipulated transmission rate (V2) is connected, the message blocks which leave the processor queue (M1) each having an address information item which denotes the interface suitable for forwarding,
**characterized**
- **in that** individually assigned selection means (S) are connected downstream of the interfaces in the respective transmission processor (P) for the processor queue (M1),
- **in that** the respective selection means (S) has a counting means (Z) connected to it whose counting range is limited in terms of the minimum and maximum counter reading, and
- **in that** the selection means and the counting means are connected to one another and designed such
- that the respective selection means detects the message blocks to be supplied to the assigned interface using the address information item contained in said message blocks and increments the instantaneous counter reading on the associated counting means by a count value corresponding to the length of the respective message block,
- **in that**, in addition, the instantaneous counter reading on this counting means is decremented at periodic intervals of time by a count value which corresponds to the flow rate of the message blocks, and
- **in that**, in the event of a stipulated threshold value being exceeded by the instantaneous counter reading, a control signal indicating an overload on the respective interface is provided at a control output on the counting means.

7. Circuit arrangement according to Claim 6,
**characterized**
**in that** if the message blocks appear in the form of packets of variable packet length and the respective packet contains details of the packet length in addition to an address information item, the respective selection means increments the instantaneous counter reading on the associated counting means as stipulated by these details.

8. Circuit arrangement according to Claim 6,
**characterized**
**in that** if the message blocks appear in the form of packets of variable packet length and the respective packet contains only a packet start and end identifier besides the address information item, the respective selection means ascertains the packet length on the basis of the respective packet start and end identifier contained in the packets and increments the instantaneous counter reading on the associated counting means as stipulated by the ascertained packet length.

9. Circuit arrangement according to one of Claims 6 to 8,
**characterized**
**in that** the control outputs on the counting means are jointly connected to an enabling means (FR) to which an enabling signal indicating the filling level of the processor queue (M1) associated with the respective transmission processor is additionally supplied, where a control signal indicating an overload on an interface is enabled only if the enabling signal indicates that the filling level of the processor queue is above a stipulated threshold value.

10. Circuit arrangement according to one of Claims 6 to 9,
**characterized**
**in that** if the message blocks are forwarded to an input queue (M2) for the individually assigned line termination device, flow control between the respective transmission processor and the line termination device associated therewith is provided and designed such that the filling level of the input queue is continually monitored in the line termination device and, if a stipulated threshold value is reached, a control signal indicating an overload is transmitted to a global control device (ST-G), whereupon the output of message blocks from the assigned processor queue (M1) is then stopped under the control of this control device.

## Revendications

1. Procédé pour la commande de la transmission de blocs de messages à l'intérieur d'un système de transmission qui dispose de processeurs de transmission (P) reliés les uns aux autres par lesquels les blocs de messages qui leur sont respectivement destinés sont transmis, après être passés dans une boucle d'attente de processeur (M1), à un débit de transmission (V2) prédéterminé à un dispositif (LAE) de raccordement de conducteurs qui leur est associé individuellement, le dispositif de raccordement de conducteurs étant doté de plusieurs interfaces à chacune desquelles est relié un conducteur de transmission (UEL) conçu pour transmettre des blocs de messages à un débit (V3) inférieur au débit de transmission (V2) défini, les blocs de messages qui quittent la boucle d'attente de processeur (M1) étant chacun dotés d'une information d'adresse qui désigne l'interface concernée par la transmission,
**caractérisé en ce que**
- dans chaque processeur de transmission (P), une valeur instantanée de la charge est déterminée pour les interfaces individuelles associées après détermination du nombre des blocs de messages qui leur sont transmis par unité de temps et du débit de transfert (V3)
- et **en ce que**, lorsque la valeur de charge instantanée déterminée pour l'une des interfaces dépasse une valeur de seuil prédéterminée, la transmission de blocs de messages à l'interface concernée est interrompue.

2. Procédé selon la revendication 1, **caractérisé en ce que** les blocs de messages qui ne peuvent momentanément pas être transmis à une interface sont rejetés par le processeur de transmission concerné lorsque la boucle d'attente de processeur qui lui est associée dépasse un degré de remplissage prédéterminé.

3. Procédé selon la revendication 1 ou 2, **caractérisé en ce que** le système de transmission est configuré comme système de transmission par paquets dans lequel les blocs de messages sont transmis sous la forme de paquets de longueur variable, la détermination d'une valeur de charge instantanée tenant compte également de la longueur des blocs de messages en plus du nombre des blocs de messages délivrés par unité de temps à chaque boucle d'attente d'entrée.

4. Procédé selon la revendication 1 ou 2, **caractérisé en ce que** le système de transmission est configuré comme système de transmission par paquets dans lequel les blocs de messages sont transmis par paquets de longueur fixe.

5. Procédé selon l'une des revendications précédentes, **caractérisé en ce que** les blocs de messages sont transmis à une boucle d'attente d'entrée (M2) du dispositif de raccordement de conducteurs qui lui est associé individuellement, un contrôle de flux entre chaque processeur de transmission et le dispositif de raccordement de conducteurs qui lui est associé étant réalisée de telle sorte que lorsque la boucle d'attente d'entrée présente un taux de remplissage prédéterminé, le processeur de transmission interrompt l'émission des blocs de messages à cette boucle d'attente d'entrée, et en cas de surcharge de l'une des interfaces, il interrompt l'émission des blocs de messages qui doivent lui être amenés.

6. Agencement de circuit pour la commande de la transmission de blocs de messages à l'intérieur d'un système de transmission qui dispose de processeurs de transmission (P) reliés les uns aux autres par lesquels les blocs de messages qui leur sont respectivement destinés sont transmis, après être passés dans une boucle d'attente de processeur (M1), à un débit de transmission prédéterminé à un dispositif (LAE) de raccordement de conducteurs qui leur est associé individuellement, le dispositif de raccordement de conducteurs étant doté de plusieurs interfaces à chacune desquelles est relié un conducteur de transmission (UEL) conçu pour transmettre des blocs de messages à un débit (V3) inférieur au débit de transmission (V2) défini, les blocs de messages qui quittent la boucle d'attente de processeur (M1) étant chacun dotés d'une information d'adresse qui désigne l'interface concernée par la transmission,
**caractérisé en ce que**
- des moyens de sélection (S) associés individuellement aux interfaces sont raccordés en aval de la boucle d'attente de processeur (M1) dans chaque processeur de transmission (P),
- **en ce qu'**un moyen de comptage (Z) est raccordé à chaque moyen de sélection (S), la plage de comptage du moyen de comptage étant limitée par un état minimum et un état maximum du compteur
- et **en ce que** les moyens de sélection et les moyens de comptage sont reliés les uns aux autres et configurés de telle sorte que
- chaque moyen de sélection détectant les blocs de messages qui doivent être amenés à l'interface associée à l'aide de l'information d'adresse qui y est contenue, et l'état instantané du compteur du moyen de comptage associé étant incrémenté d'une valeur de comptage qui correspond à la longueur du bloc de messages concerné,
- et en outre, l'état instantané du compteur de ce moyen de comptage est décrémenté à des intervalles de temps périodiques d'une valeur de comptage qui correspond au débit de transfert des blocs de messages et
- au cas où l'état instantané du compteur dépasse une valeur de seuil prédéterminée, un signal de commande qui indique une surcharge de l'interface concernée est délivré à une sortie de commande du moyen de comptage.

7. Agencement de circuit selon la revendication 6, **caractérisé en ce qu'**au cas où les blocs de messages apparaissent sous forme de paquets de longueur variable et où chaque paquet contient en plus d'une information d'adresse des données sur la longueur du paquet, l'état instantané du compteur du moyen de comptage associé est incrémenté par le moyen de sélection concerné en fonction de ces données.

8. Agencement de circuit selon la revendication 6, **caractérisé en ce qu'**au cas où les blocs de messages apparaissent sous la forme de paquets de longueur variable et où chaque paquet contient en plus des informations d'adresse uniquement une caractérisation de début de paquet et une caractérisation de fin de paquet, la longueur du paquet est déterminée par le moyen de sélection concerné à l'aide de la caractéristique de début de paquet et de la caractéristique de fin de paquet contenue dans chaque paquet, et l'état instantané du compteur du moyen de comptage associé est incrémenté en conformément à la longueur du paquet ainsi déterminée.

9. Agencement de circuit selon l'une des revendications 6 à 8,
**caractérisé en ce que** les sorties de commande des moyens de comptage sont raccordées en commun à un moyen de libération (FR) auquel est en outre apporté un signal de libération qui indique le degré de remplissage de la boucle d'attente de processeur (M1) associée à chaque processeur de transmission, un signal de commande qui indique une surcharge d'une interface n'étant libéré que si le signal de libération indique que le degré de remplissage de la boucle d'attente de processeur est situé au-dessus d'une valeur de seuil prédéterminée.

10. Agencement de circuit selon l'une des revendications 6 à 9,
**caractérisé en ce qu'**au cas où les blocs de messages sont transmis à une boucle d'attente d'entrée M2) du dispositif de raccordement de conducteur qui lui est associé individuellement, une commande de flux entre chaque processeur de transmission et le dispositif de raccordement de conducteur qui lui est associé est prévu et configuré de telle sorte que le degré de remplissage de la boucle d'attente d'entrée soit surveillé en permanence dans le dispositif de raccordement de conducteur et que lorsqu'une valeur de seuil prédéterminée est atteinte, un signal de commande qui indique une surcharge soit transmis à un dispositif de commande globale (ST-G), suite à quoi l'émission de blocs de messages par la boucle d'attente de processeur (M1) associée est interrompue sous la commande de ce dispositif de commande.
